(19) Europäisches Patentamt
European Patent Office
Office européen des brevets

(11) **EP 4 693 022 A2**

(12) **EUROPEAN PATENT APPLICATION**

(43) Date of publication:
**11.02.2026 Bulletin 2026/07**

(21) Application number: **25224717.6**

(22) Date of filing: **17.12.2025**

(51) International Patent Classification (IPC):
**G06F 8/30** *(2018.01)* **G06F 8/33** *(2018.01)*
**G06F 8/36** *(2018.01)*

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.10.2025 CN 202511430817**

(71) Applicant: **BEIJING BAIDU NETCOM SCIENCE AND TECHNOLOGY CO., LTD.**
**Beijing 100085 (CN)**

(72) Inventors:
• **Chong, Yee Hin**
  **Beijing, 100085 (CN)**
• **Hou, Zhinan**
  **Beijing, 100085 (CN)**
• **Li, Annan**
  **Beijing, 00085 (CN)**
• **Wu, Jianmin**
  **Beijing, 100085 (CN)**
• **Shen, Dou**
  **Beijing, 100085 (CN)**

(74) Representative: **advotec.**
**Patent- und Rechtsanwaltspartnerschaft mbB**
**Widenmayerstraße 4**
**80538 München (DE)**

(54) **METHOD AND APPARATUS FOR ADAPTIVE CODE PROCESSING BASED ON ARTIFICIAL INTELLIGENCE, AND INTELLIGENT AGENT**

(57)     A method for adaptive code processing based on artificial intelligence, including: obtaining a candidate code set, wherein the candidate code set comprises a plurality of candidate codes, first description information corresponding to each candidate code, and second description information corresponding to each code slice in the candidate codes; determining a similarity between every two candidate codes in the candidate code set based on a plurality pieces of first description information and a plurality pieces of second description information; obtaining a new candidate code set by performing crossover and mutation on two candidate codes with a similarity less than a first threshold; and returning to the step of determining the similarity based on the new candidate code set until a target code set meeting a requirement is obtained.

obtaining a candidate code set — 101

determining a similarity between every two candidate codes in the candidate code set based on a plurality pieces of first description information and a plurality pieces of second description information — 102

obtaining a new candidate code set by performing crossover and mutation on two candidate codes with a similarity lower than a first threshold — 103

returning to the step of determining the similarity based on the new candidate code set until a target code set meeting a requirement is obtained — 104

FIG. 1

## Description

### TECHNICAL FIELD

The invention relates to the field of artificial intelligence (AI) technologies, and in particular to technical fields such as intelligent agents, coding agents, assisted programming, large language models (LLMs), deep learning, and retrieval-augmented generation, and in particular to a method and an apparatus for adaptive code processing based on artificial intelligence, and an intelligent agent.

### BACKGROUND

Automatic code generation and optimization technologies play a significant role in improving development efficiency, lowering technical barriers, and enhancing code quality. The evolution of candidate program solutions typically relies on the crossover and mutation of code slices. How to balance the diversity of evolution solutions with the performance optimization during the search has become a key bottleneck restricting technological development.

### SUMMARY

The invention aims to address at least one of the technical problems in the related art.

Thus, an objective of the invention is to provide a method and an apparatus for adaptive code processing based on artificial intelligence, and an intelligent agent. By measuring similarity across the entire code and within code slices respectively, and performing crossover on a candidate code program with low similarity, the method improves code generation efficiency while ensuring the diversity of evolution.

According to a first aspect of the invention, a method for adaptive code processing based on artificial intelligence is provided. The method includes: obtaining a candidate code set, in which the candidate code set includes a plurality of candidate codes, first description information corresponding to each candidate code, and second description information corresponding to each slice in the candidate codes; determining a similarity between every two candidate codes in the candidate code set based on a plurality pieces of first description information and a plurality pieces of second description information; obtaining a new candidate code set by performing crossover and mutation on two candidate codes with a similarity less than a first threshold; and returning to the step of determining the similarity based on the new candidate code set until a target code set meeting a requirement is obtained.

According to a second aspect of the invention, an apparatus for adaptive code processing based on artificial intelligence is provided. The apparatus includes: a first obtaining module, configured to obtain a candidate code set, in which the candidate code set includes a plurality of candidate codes, first description information corresponding to each candidate code, and second description information corresponding to each slice in the candidate codes; a first determining module, configured to determine a similarity between every two candidate codes in the candidate code set based on a plurality pieces of first description information and a plurality pieces of second description information; a first processing module, configured to obtain a new candidate code set by performing crossover and mutation on two candidate codes with a similarity less than a first threshold; and a second processing module, configured to return to the step of determining the similarity based on the new candidate code set until a target code set meeting a requirement is obtained.

According to a third aspect of the invention, an intelligent agent is provided. The intelligent agent includes: an input module, configured to receive a code to be processed and/or a code processing instruction; a processing module, configured to, based on the code to be processed and/or the code processing instruction, obtain a target code set by calling a large model to execute the method according to the first aspect; and an output module, configured to output the target code set.

According to a fourth aspect of the invention, an electronic device is provided. The electronic device includes: at least one processor; and a memory communicatively coupled to the at least one processor and storing instructions executable by the at least one processor; in which when the instructions are executed by the at least one processor, the at least one processor is caused to perform the method according to the first aspect.

According to a fifth aspect of the invention, a non-transitory computer readable storage medium is provided. The non-transitory computer readable storage medium stores computer instructions, in which the computer instructions are caused to enable a computer to perform the method according to the first aspect.

According to a sixth aspect of the invention, a computer program product is provided. The computer program product includes computer instructions which when executed by a processor implement the method according to the first aspect.

The method and the apparatus for adaptive code processing based on artificial intelligence, and the intelligent agent provided in the invention have the following beneficial effects.

In the invention, by measuring the similarity between every two candidate codes based on overall description information and slice description information of each candidate code in the candidate code set, obtaining the new candidate code set by selecting two candidate codes with less similarity for crossover and mutation and recalculating the similarity, and obtaining the target code set meeting the requirement after a plurality of iterations, the target code set may provide data reference for automatic code generation, optimization, or repair. Thus, the code generation efficiency is improved while ensuring the diversity of evolution.

It should be understood that what is described in this section is not intended to identify key or important features of embodiments of the invention, nor is it intended to limit the scope of the invention. Other features of the invention will be readily understood by the following specification.

## BRIEF DESCRIPTION OF THE DRAWINGS

The above-mentioned and/or additional aspects and advantages of the invention will become apparent and readily appreciated from the following description of embodiments in conjunction with the accompanying figures. The accompanying figures are used for a better understanding of the invention and do not constitute a limitation of the invention.

FIG. 1 is a flowchart illustrating a method for adaptive code processing based on artificial intelligence according to an embodiment of the invention.
FIG. 2 is a flowchart illustrating a method for adaptive code processing based on artificial intelligence according to another embodiment of the invention.
FIG. 3 is a flowchart illustrating a method for adaptive code processing based on artificial intelligence according to another embodiment of the invention.
FIG. 4 is a flowchart illustrating a method for adaptive code processing based on artificial intelligence according to another embodiment of the invention.
FIG. 5 is a block diagram illustrating an apparatus for adaptive code processing based on artificial intelligence according to another embodiment of the invention.
FIG. 6 is a block diagram illustrating an intelligent agent according to an embodiment of the invention.
FIG. 7 is a block diagram illustrating an electronic device configured to implement embodiments of the invention.

## DETAILED DESCRIPTION

Exemplary embodiments of the invention are described hereinafter in conjunction with the accompanying drawings, which include various details of the embodiments of the invention in order to aid in understanding, and should be considered exemplary only. Similarly, descriptions of well-known features and structures are omitted from the following description for the sake of clarity and brevity.

The embodiments of the invention relate to the field of AI technology, such as intelligent agents, coding agents, assisted programming, large language models, deep learning, and retrieval-augmented generation.

Artificial Intelligence (AI) is a new technical science that studies and develops theories, methods, technologies, and application systems for simulating, extending, and expanding human intelligence. The AI is a branch of computer science that attempts to understand the essence of intelligence and create new intelligent machines capable of reacting in ways similar to human intelligence.

An intelligent agent is a computer system or an entity capable of autonomous action, environmental perception, decision-making, and interaction with the environment. The intelligent agent typically uses a large language model as the core decision-making and processing unit, possessing the ability to think independently and call tools to progressively accomplish given goals.

A coding agent is an AI tool capable of automatically performing programming tasks. The coding agent may understand natural language instructions and convert the instructions into valid code slices, thus improving developer efficiency.

Programming assistance refers to a type of solution that provides support to developers via tools, technologies, or services in various stages of a software development lifecycle, aiming to reduce programming difficulty, minimize repetitive work, avoid errors, and enhance development efficiency. The programming assistance does not completely replace manual programming but acts as a "collaborative partner" for developers, covering an entire process from code writing and debugging to maintenance. The programming assistance is particularly suitable for solving problems related to repetitive tasks, syntax standardization, and logic verification.

A large language model (LLM) refers to a deep learning model trained on a large amount of text data, enabling the model to generate natural language text or understand the meaning of language text. The models may provide in-depth knowledge and language production on various topics by being trained on massive datasets. A core idea is to learn patterns and structure of natural language through large-scale unsupervised training, simulating human language cognition and generation processes to some extent.

Deep learning involves learning internal laws and representation levels of sample data. The information obtained during learning processes greatly aids the interpretation of data such as text, images, and sound. A ultimate goal of deep learning is to enable machines to possess analytical and learning capabilities like humans, allowing the machines to recognize data such as text, images, sound, and the like.

A retrieval-augmented generation (RAG) model combines language models with information retrieval technology. Specifically, when a model needs to generate text or answer questions, the model first retrieves relevant information from a vast collection of documents, then uses the retrieved information to guide the text generation, thus improving the quality and accuracy of predictions.

In the technical solutions of the invention, processing including collection, storage, use, shaping, transmission, provision and invention of personal information of users is in compliance with the provisions of relevant laws and regulations, and does not violate public order and moral.

The following describes the method and the apparatus for adaptive code processing based on artificial intelligence, and the intelligent agent according to embodiments of the invention with reference to the accompanying figures.

It should be noted that an execution entity of the method for adaptive code processing based on artificial intelligence in the embodiments is an apparatus for adaptive code processing based on artificial intelligence. The apparatus may be implemented by software and/or hardware, and may be configured in an electronic device. The electronic device may include, but is not limited to, terminals, servers, and the like.

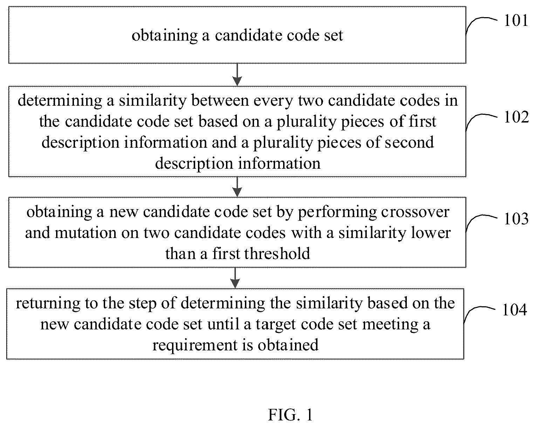

FIG. 1 is a flowchart illustrating a method for adaptive code processing based on artificial intelligence according to an embodiment of the invention.

As shown in FIG. 1, the method for adaptive code processing based on artificial intelligence includes the following steps S101 to S104.

At step 101, a candidate code set is obtained.

The candidate code set includes a plurality of candidate codes, first description information corresponding to each of the plurality of candidate codes, and second description information corresponding to each slice in the candidate codes.

The first description information may include any information used to describe a function, a logic, an algorithm type, and the like of a candidate code.

The second description information may include any information used to describe an algorithm, a data structure, input data, output data, and the like corresponding to a code slice.

In embodiments of the invention, the candidate code set may be obtained via different methods based on a user requirement. For example, in a case that the user inputs code for completion, optimization, or repair processing, all solutions generated during an evolution process of the code may be determined as candidate codes, and the candidate code set obtained. Alternatively, codes related to the user requirement may be queried from a historically collected code database and used as candidate codes, and the candidate set is obtained.

In embodiments of the invention, each candidate code may be represented as several code slices. Each code slice may correspond to a solution for a sub-problem. Thus, the second description information corresponding to the code slice may be determined based on an algorithm, a data structure, input data, output data, and the like of the sub-problem.

At step 102, a similarity between every two candidate codes in the candidate code set is determined based on a plurality pieces of first description information and a plurality pieces of second description information.

In embodiments of the invention, for any two candidate codes in the candidate code set, the first description information of the two candidate codes may be used to measure closeness of the two candidate codes in terms of functional objectives and overall strategies, thus determining a global similarity. Further, the second description information of the two candidate codes may be used to measure local differences of code slices of the two candidate codes in terms of methods, data structures, input/output, and the like, thus determining a local similarity. Subsequently, the two aspects of similarity may be fused, such as by addition or weighted summation, to obtain the similarity between the two candidate codes. Thus, the similarity between every two candidate codes in the candidate code set may be determined.

At step 103, a new candidate code set is obtained by performing crossover and mutation on two candidate codes with a similarity less than a first threshold.

The first threshold may be a threshold dynamically set based on experience or actual needs. A value of the first threshold is relatively small and is used to filter candidate codes with less similarity in the candidate code set.

In embodiments of the invention, after determining the similarity between every two candidate codes in the candidate code set, each obtained similarity may be compared with the first threshold. In a case that the similarity corresponding to two candidate codes is less than the first threshold, the two candidate codes have significant differences in aspects such as function, logic, and algorithm type used. By performing the crossover and mutation on the two candidate codes, for example, by recombining code slices, a completely new code structure may be generated, resulting in a new candidate code, thus avoiding premature convergence to a local optimal solution during processing. A set of new candidate codes obtained after performing the crossover and mutation on all pairs of two candidate codes whose corresponding similarity is less than the first threshold constitutes a new candidate code set.

In embodiments of the invention, performing the crossover and mutation on two candidate codes with less similarity may expand the structural diversity of new candidate solutions, ensuring the diversity of code processing.

At step 104, based on the new candidate code set, the step of determining the similarity is performed iteratively until a target code set meeting a requirement is obtained.

In embodiments of the invention, after obtaining the new candidate code set, the candidate code set may be evaluated to determine whether a current candidate code set meets the requirement. For example, an evaluation tool may be used to score a quality of the candidate code set. In a case that it is determined that a quality score of the candidate code set is greater than a score threshold set by the user, the candidate code set is determined as the target code set meeting the requirement. Alternatively, other conditions for judging whether the candidate code set is the target code set may be set based on a practical requirement, which is not limited in the invention.

In embodiments of the invention, after obtaining the new candidate code set and if the candidate code set does not meet the requirement, the similarity between every two candidate codes in the candidate code set may be recalculated. Then, two candidate codes with a similarity less than the first threshold are selected for the crossover and mutation to obtain another new candidate code set. This process may be iterated a plurality of times. The iteration stops when a newly obtained candidate code set meets the requirement, and the candidate code set is determined as the target code set.

In embodiments of the invention, after obtaining the target code set, codes in the target code set may be used for code generation, code completion, or optimization based on a task requirement of the user, thus significantly improving the efficiency and effectiveness of code generation and optimization.

In the embodiment, by measuring the similarity between every two candidate codes based on overall description information and slice description information of each candidate code in the candidate code set, obtaining the new candidate code set by selecting two candidate codes with less similarity for crossover and mutation and recalculating the similarity, and obtaining the target code set meeting the requirement after a plurality of iterations, the target code set may provide data reference for automatic code generation, optimization, or repair. Thus, the code generation efficiency is improved while ensuring the diversity of evolution.

The method for adaptive code processing based on artificial intelligence provided in the invention may be applied to scenarios such as programming assistance, automatic code completion, code debugging and optimization, automated vulnerability repair, and test case generation. For example, a developer can input part of a program in an integrated development environment (IDE). By utilizing the code processing method of the invention, the target code set may be obtained and recommended for use by the developer. Alternatively, the user may input a code slice containing defects. By obtaining target codes that are functionally equivalent to the code slice containing defects but are more secure or robust, an automatic replacement may be performed or a repaired version may be generated, thus enhancing system security.

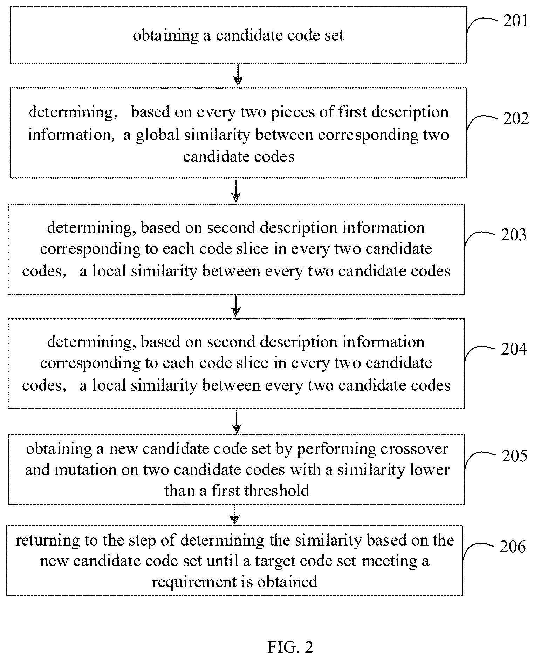

FIG. 2 is a flowchart illustrating a method for adaptive code processing based on artificial intelligence according to another embodiment of the invention.

As shown in FIG. 2, the method for adaptive code processing based on artificial intelligence includes the following steps 201 to 206.

At step 201, a candidate code set is obtained.

For the description of step 201, reference may be made to the above embodiments, and details are not repeated herein.

At step 202, a global similarity between corresponding two candidate codes is determined based on every two pieces of first description information.

It should be noted that, in the invention, the global similarity quantifies closeness of candidate codes in terms of functional objectives and overall strategies. It may also be referred to as overall similarity, semantic similarity, and the like.

In embodiments of the invention, the first description information may be converted into semantic vectors, and the global similarity between candidate codes may be calculated via cosine similarity. Alternatively, keywords in the first description information may be matched, and the global similarity between candidate codes may be determined based on a matching ratio. Other calculation methods may also be adopted to determine the global similarity between two candidate codes, which is not limited in the invention.

At step 203, a local similarity between every two candidate codes is determined based on second description information corresponding to each code slice in every two candidate codes.

It should be noted that, in the invention, the local similarity quantifies a local difference of the code slices of the candidate codes in terms of methods, data structures, and input/output, such as a matching degree of abstract syntax trees or control flow graphs. It may also be referred to as substructure similarity, and the like.

In embodiments of the invention, the second description information may be converted into semantic vectors, and the similarity between code slices may be calculated via the cosine similarity. Then, the local similarity between two candidate codes may be obtained by fusing the similarities of all code slices. Other calculation methods may also be adopted to determine the local similarity between two candidate codes, which is not limited in the invention.

At step 204, the similarity between every two candidate codes is obtained by fusing the global similarity and the local similarity.

In embodiments of the invention, the method for fusing the global similarity and the local similarity may be direct addition, or weighted summation according to specific weights.

For example, when performing weighted summation of the global similarity and the local similarity based on specific weights, the similarity between two candidate codes may be expressed by the following formula (1):

$$S_{total}(A, B) = \alpha \cdot S_{struct}(A, B) + (1 - \alpha) \cdot S_{semantic}(A, B) \quad (1)$$

where, $S_{total}(A, B)$ represents a similarity between candidate code A and candidate code B, $S_{struct}(A, B)$ represents a local similarity between candidate code A and candidate code B, $S_{semantic}(A, B)$ represents a global similarity between candidate code A and candidate code B, and $\alpha$ is a weight coefficient for the local similarity in the similarity, which may be customized based on experience or actual needs.

Optionally, in a case that a similarity between any two candidate codes is greater than or equal to the first threshold and a local similarity between partial code slices in the any two candidate codes is less than a second threshold, a new candidate code may be obtained by performing crossover and mutation on the partial code slices in the any two candidate codes.

The second threshold may be a threshold dynamically set based on experience or actual needs. A value of the second threshold is relatively small and is used to filter code slices with less similarity in the candidate codes. The second threshold and the first threshold are used for filtering different targets-one for candidate codes and the other for code slices within candidate codes-thus no specific magnitude relationship is set between the second threshold and the first threshold.

In embodiments of the invention, in a case that the similarity between any two candidate codes is greater than or equal to the first threshold, it may be determined that the two candidate codes are relatively similar in terms of overall function, logic, etc. In this case, code slices with relatively less similarity within the candidate codes may be further identified. Performing the crossover and mutation on the code slices may introduce moderate differences, avoiding falling into a local optimum.

It should be noted that, in embodiments of the invention, while performing the crossover and mutation on two candidate codes with a corresponding similarity less than the first threshold, the crossover and mutation on partial code slices may also be performed for two candidate codes whose similarity is greater than or equal to the first threshold and whose partial code slices have a local similarity less than the second threshold.

Alternatively, after performing the crossover and mutation on two candidate codes with a corresponding similarity less than the first threshold and updating the candidate code set for a certain number of rounds, when the similarity between all candidate codes becomes greater than the first threshold, the slice crossover between candidate codes may be executed.

In the embodiment, by performing the crossover and mutation on partial code slices with corresponding less local similarity in a case that the global similarity between two candidate codes is relatively great, a new candidate code may be obtained, introducing moderate differences and avoiding falling into a local optimum. This may ensure rapid convergence while maintaining the diversity of candidate codes, avoiding outputting homogeneous code, and thus exploring better solutions for complex problems.

At step 205, a new candidate code set is obtained by performing crossover and mutation on two candidate codes with a similarity less than a first threshold.

At step 206, based on the new candidate code set, the step of determining the similarity is performed iteratively until a target code set meeting a requirement is obtained.

For the descriptions of S205 and S206, reference may be made to the above embodiments, and details are not repeated here.

In the embodiment, by measuring the global similarity and the local similarity between the candidate codes, the target code determined based on the similarities not only ensures reliability at a syntactic level but also meets a user requirement at the functional and performance levels.

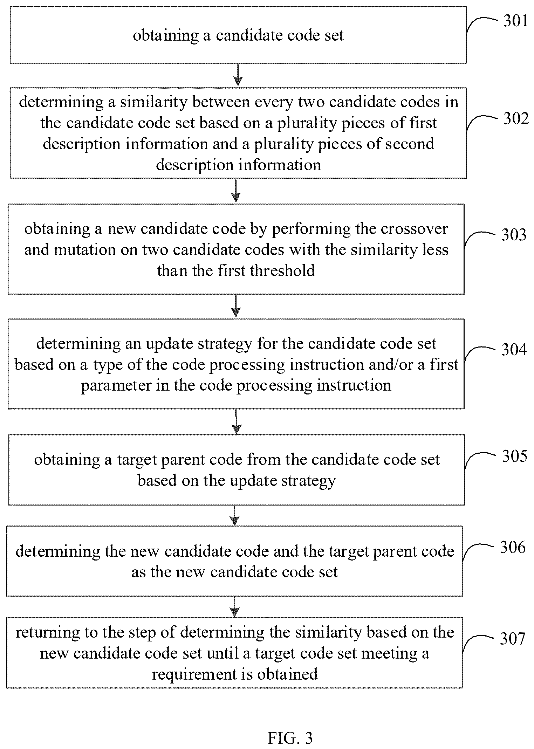

FIG. 3 is a flowchart illustrating a method for adaptive code processing based on artificial intelligence according to another embodiment of the invention.

As shown in FIG. 3, the method for adaptive code processing based on artificial intelligence includes the following steps 301 to 307.

At step 301, a candidate code set is obtained.

Optionally, a code generated during an evolution process of a received code to be processed may be determined as a candidate code.

The code to be processed refers to code provided by a user that requires optimization or completion.

In embodiments of the invention, a code to be processed may undergo a plurality of operations such as modification, optimization, extension, and refactoring during the evolution process. All code versions generated by all the operations may be determined as candidate codes. Thus, the candidate codes may reflect information such as contextual logic and problem solutions from historical evolution, which is beneficial for improving code quality.

Alternatively, a candidate code associated with a received code processing instruction may be obtained from a reference code library.

The reference code library may be a database storing historical codes.

In embodiments of the invention, different reference codes in the reference code library may correspond to different functions or algorithm types, and the like. The user may specify requirements (e.g., what function the code should have, what its purpose is, etc.) by sending a code processing instruction. Thus, at least one candidate code associated with the received code processing instruction may be obtained from the reference code library to obtain the candidate code set.

In the embodiment, obtaining the candidate code via a plurality of methods may adapt to different task scenarios, improving the adaptability of code processing.

At step 302, a similarity between every two candidate codes in the candidate code set is determined based on a plurality pieces of first description information and a plurality pieces of second description information.

For the descriptions of S301 and S302, reference may be made to the above embodiments, and details are not repeated here.

At step 303, a new candidate code is obtained by performing crossover and mutation on two candidate codes with a similarity less than a first threshold.

In embodiments of the invention, after determining the similarity between every two candidate codes in the candidate code set, each obtained similarity may be compared with the first threshold. In a case that the similarity corresponding to two candidate codes is less than the first threshold, the two candidate codes have significant differences in aspects such as function, logic, algorithm type used, and the like. By performing the crossover and mutation on the two candidate codes, for example, by recombining code slices, a completely new code structure may be generated, resulting in a new candidate code.

At step 304, an update strategy for the candidate code set is determined based on a type of the code processing instruction and/or a first parameter in the code processing instruction.

The update strategy indicates a proportion of parent codes included in the new candidate code set, a quantity of parent codes included in the new candidate code set, and/or a filtering condition for parent codes. A parent code refers to a code used for generating a new candidate code via the crossover and mutation.

In embodiments of the invention, since different types of code processing instructions lead to different purposes for the ultimately obtained code, different update strategies may be adopted. For example, if a goal of the code processing instruction is to generate code with entirely new logic, then the parent codes may be discarded in the update strategy. However, if the goal is to generate more optimized code based on an existing framework, the parent codes may be retained in the update strategy. Alternatively, if the code processing instruction is for code optimization, partial parent codes may be retained to avoid losing excellent solutions present in the parent codes.

It should be noted that, in embodiments of the invention, the user may also directly input, during use, the quantity of parent codes, the proportion of parent codes, etc., to be retained when updating the candidate code set.

In embodiments of the invention, the user may also directly input, during use, the quantity of parent codes, the proportion of parent codes, etc., to be retained when updating the candidate code set, which constitutes the first parameter in the code processing instruction. Thus, the update strategy for the candidate code set may be determined based on the first parameter in the code processing instruction.

In the invention, the update strategy for the candidate code set may also be determined by comprehensively considering the type of the code processing instruction and the first parameter in the code processing instruction.

At step 305, a target parent code is obtained from the candidate code set based on the update strategy.

In embodiments of the invention, the corresponding target parent code may be determined from the plurality of candidate codes used for the crossover and mutation based on the proportion of parent codes, the quantity of parent codes, and/or the filtering condition for parent codes indicated in the update strategy.

At step 306, the new candidate code and the target parent code are determined as the new candidate code set.

In embodiments of the invention, by including parent codes together in a new candidate code set when generating a new candidate code set via the crossover and mutation, stability and diversity during the code evolution process may be maintained, optimal solutions may be preserved, and the loss of valuable information due to excessive generational replacement may be avoided.

At step 307, based on the new candidate code set, the step of determining the similarity is performed iteratively until a target code set meeting a requirement is obtained.

For the description of S307, reference may be made to the above embodiments, and details are not repeated here.

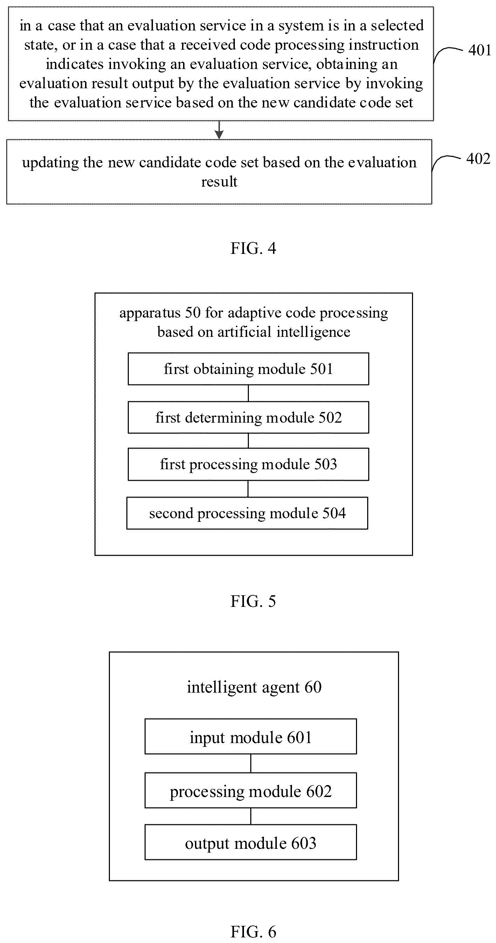

FIG. 4 is a flowchart illustrating a method for adaptive code processing based on artificial intelligence according to another embodiment of the invention.

As shown in FIG. 4, the method for adaptive code processing based on artificial intelligence includes the following steps 401 to 402.

At step 401, in a case that an evaluation service in a system is in a selected state, or in a case that a received code processing instruction indicates invoking an evaluation service, an evaluation result output by the evaluation service is obtained by invoking the evaluation service based on the new candidate code set.

The evaluation result includes an evaluation value of a candidate code and/or a code slice to be updated in the candidate code.

In embodiments of the invention, in a case that the evaluation service in the system is in the selected state, or in a case that the received code processing instruction indicates invoking the evaluation service, the evaluation service may be invoked, and expert knowledge within the evaluation service are utilized for global feedback and local feedback, thus obtaining the evaluation result.

In embodiments of the invention, the evaluation service may score each candidate code to obtain an evaluation value, assessing overall optimization potential of the new candidate code set. This is used to filter candidate codes to be retained or eliminated within the candidate code set. For example, a candidate code with a greater evaluation value is retained, a candidate code with an evaluation value less than a certain threshold may be deleted from the candidate code set. Alternatively, the evaluation service may also evaluate code slices within each candidate code, precisely locating a code slice that needs replacement or adjustment, thus determining the code slice to be updated in the candidate code. The evaluation service may also be performed for simultaneously obtaining an evaluation value for each candidate code and determining the code slices to be updated within the candidate code.

At step 402, the new candidate code set is updated based on the evaluation result.

In embodiments of the invention, after obtaining the evaluation result, each candidate code may be deleted or retained based on the evaluation result, and code slices within candidate codes may be replaced or adjusted, thus completing the update of the new candidate code set.

In the embodiment, by driving an adaptive editing strategy utilizing feedback from the evaluation service, redundant candidate solutions arising from blind search may be significantly reduced, convergence speed may be accelerated, and thus product response efficiency and user experience may be improved.

Optionally, updating the new candidate code set may include at least one of: deleting a candidate code with an evaluation value less than an evaluation threshold in the new candidate code set; or obtaining a new candidate code by updating the code slice to be updated in the candidate code.

The evaluation threshold may also be a value customized based on experience or actual requirements, which is not limited in the invention.

In embodiments of the invention, by updating the candidate code set from both overall perspective and local perspective, the accuracy of code processing may be improved, which is beneficial for enhancing the quality of code generation.

Optionally, when updating the code slice to be updated in the candidate code, a similarity between second description information of the code slice to be updated and third description information of each code slice in a gene pool may first be determined. Then, based on the similarity, a target code slice or a target parent code including the target code slice is obtained from the gene pool. Subsequently, the new candidate code is obtained by updating the code slice to be updated by using the target code slice or the target parent code.

In embodiments of the invention, a gene pool for code slices may be constructed based on a vector database, storing high-quality code slices and feature indexes of the code slices, such as third description information. Thus, retrieval-augmented generation (RAG) technology may be employed to obtain the target code slice or the target parent code from the gene pool, performing crossover enhancement or mutation enhancement on the code slice to be updated, thus updating the code slice to be updated and obtaining the new candidate code. The crossover enhancement may provide additional parent codes or code slices for the candidate code, increasing crossover diversity. The mutation enhancement may provide, at a feedback-located code slice position, a target code slice that is functionally similar but performs better, reducing the ineffective search space.

In embodiments of the invention, when updating the code slice to be updated, direct replacement may be performed. Alternatively, the target code slice or the target parent code may be used to perform the crossover with the code slice to be updated, and the code slice to be updated may be replaced based on a crossover result, and the new candidate code is obtained.

In embodiments of the invention, by obtaining high-quality code slices from the gene pool and incorporating the code slices into the evolution process of candidate codes, while eliminating low-quality code slices or redundant slices, the updated candidate codes are ensured to be more representative, guaranteeing the efficiency of code processing.

Optionally, when obtaining the target parent code from the gene pool, in a case that a control signal is received, the target code slice or the target parent code including the target code slice may be obtained from the gene pool based on the control signal and the similarity. The control signal indicates a retrieval logic and/or a quantity of retrieval results.

The retrieval logic may be semantic similarity retrieval, functional similarity retrieval, target algorithm retrieval, and the like.

The quantity of retrieval results indicates how many target code slices or target parent codes including the target code slice is obtained to update the candidate code.

In embodiments of the invention, by receiving the control signal to dynamically adjust the logic for retrieving the gene pool and amount of data of candidate codes used for updating, users may autonomously adjust the update process of candidate codes. This ensures that the code update results better meet user requirements and optimizes the use experience.

Optionally, an index corresponding to a candidate code may also be determined based on first description information and/or second description information associated with a candidate code with an evaluation value greater than the evaluation threshold. Then, the candidate code and the index are associatively stored in the gene pool.

In embodiments of the invention, by adopting a dynamic update mechanism for the gene pool, the system continuously accumulates and filters high-quality code slices during operation, forming a positive feedback loop for continuous improvement, making the product increasingly intelligent over time.

FIG. 5 is a block diagram illustrating an apparatus for adaptive code processing based on artificial intelligence according to an embodiment of the invention.

As shown in FIG. 5, the apparatus 50 for adaptive code processing based on artificial intelligence includes a first obtaining module 501, a first determining module 502, a first processing module 503, and a second processing module 504.

The first obtaining module 501 is configured to obtain a candidate code set, in which the candidate code set includes a plurality of candidate codes, first description information corresponding to each candidate code, and second description information corresponding to each code slice in the candidate codes.

The first determining module 502 is configured to determine a similarity between every two candidate codes in the candidate code set based on a plurality pieces of first description information and a plurality pieces of second description information.

The first processing module 503 is configured to obtain a new candidate code set by performing crossover and mutation on two candidate codes with a similarity less than a first threshold.

The second processing module 504 is configured to return to the step of determining the similarity based on the new candidate code set until a target code set meeting a requirement is obtained.

Optionally, the first determining module 502 is specifically configured to determine, based on every two pieces of first description information, a global similarity between corresponding two candidate codes; determine, based on second description information corresponding to each code slice in every two candidate codes, a local similarity between every two candidate codes; and obtain the similarity between every two candidate codes by fusing the global similarity and the local similarity.

Optionally, the first processing module 503 is further configured to, in a case that a similarity between any two candidate codes is greater than or equal to the first threshold and a local similarity between partial code slices in the any two candidate codes is less than a second threshold, obtain a new candidate code by performing the crossover and mutation on the partial code slices in the any two candidate codes.

Optionally, the first obtaining module 501 is further configured to perform at least one of: determining a code generated during an evolution process of a received code to be processed as a candidate code; or obtaining a candidate code associated with a received code processing instruction from a reference code library.

Optionally, the first processing module 503 is specifically configured to obtain a new candidate code by performing the crossover and mutation on two candidate codes with the similarity less than the first threshold; determine an update strategy for the candidate code set based on a type of a code processing instruction and/or a first parameter in the code processing instruction, in which the update strategy indicates a proportion of parent codes to be included in the new candidate code set, a quantity of parent codes to be included in the new candidate code set, and/or a filtering condition for parent codes; obtain a target parent code from the candidate code set based on the update strategy; and determine the new candidate code and the target parent code as the new candidate code set.

Optionally, the first processing module 503 is further configured to, in a case that an evaluation service in a system is in a selected state, or in a case that a received code processing instruction indicates invoking an evaluation service, obtain an evaluation result output by the evaluation service by invoking the evaluation service based on the new candidate code set, in which the evaluation result includes an evaluation value of a candidate code and/or a code slice to be updated in the candidate code; and update the new candidate code set based on the evaluation result.

Optionally, the first processing module 503 is further configured to perform at least one of: deleting a candidate code with an evaluation value less than an evaluation threshold in the new candidate code set; or obtaining a new candidate code by updating the code slice to be updated in the candidate code.

Optionally, the first processing module 503 is specifically configured to determine a similarity between second description information of the code slice to be updated and third description information of each code slice in a gene pool; obtain, based on the similarity, a target code slice or a target parent code including the target code slice from the gene pool;

and obtain the new candidate code by updating the code slice to be updated by using the target code slice or the target parent code.

Optionally, the first processing module 503 is specifically configured to, in a case that a control signal is received, obtain, based on the control signal and the similarity, the target code slice or the target parent code including the target code slice from the gene pool, in which the control signal indicates a retrieval logic and/or a quantity of retrieval results.

Optionally, the first processing module 503 is further configured to perform at least one of: determining, based on first description information and/or second description information associated with a candidate code with an evaluation value greater than the evaluation threshold, an index corresponding to the candidate code; or associatively storing the candidate code and the index in the gene pool.

It should be noted that the explanations and descriptions of the above embodiments of the method for adaptive code processing based on artificial intelligence are also applicable to the apparatus for adaptive code processing based on artificial intelligence of the embodiment, and details are not repeated herein.

In the embodiment, by measuring the similarity between every two candidate codes based on overall description information and slice description information of each candidate code in the candidate code set, obtaining the new candidate code set by selecting two candidate codes with less similarity for crossover and mutation and recalculating the similarity, and obtaining the target code set meeting the requirement after a plurality of iterations, the target code set may provide data reference for automatic code generation, optimization, or repair. Thus, the code generation efficiency is improved while ensuring the diversity of evolution.

Embodiments of the invention also provide an intelligent agent. FIG. 6 is a block diagram illustrating an intelligent agent according to an embodiment of the invention. As shown in FIG. 6, the intelligent agent 60 may include an input module 601, a processing module 602, and an output module 603.

The input module 601 is configured to receive a code to be processed and/or a code processing instruction. The processing module 602 is configured to, based on the code to be processed and/or the code processing instruction received by the input module 601, obtain a target code set by invoking a large model to execute the method for adaptive code processing based on artificial intelligence as described in the above embodiments. The output module 603 is configured to output the target code set.

In embodiments of the invention, by invoking the intelligent agent shown in FIG. 6, a user only needs to input at least one piece of information of the code to be processed and the code processing instruction to obtain the target code set output by the intelligent agent. This provides data reference for automatic code generation, optimization, or repair, assists user programming, and improves work efficiency.

According to embodiments of the invention, the invention also provides an electronic device, a readable storage medium, and a computer program product.

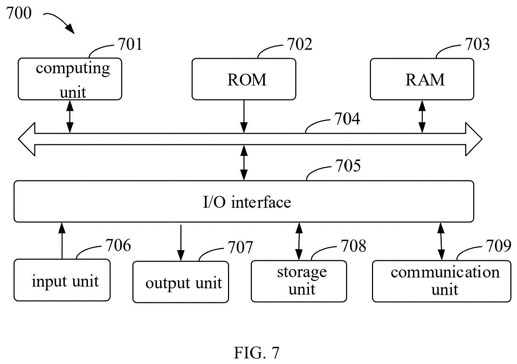

FIG. 7 is a block diagram illustrating an electronic device according to an embodiment of the invention. The electronic device 700 is intended to represent various types of digital computers, such as laptop computers, desktop computers, workstations, personal digital assistants, servers, blade servers, mainframe computers, and other suitable computers. The electronic device may also represent various types of mobile devices, such as personal digital assistants, cellular phones, smart phones, wearable devices, and other similar computing devices. The components shown herein, their connections and relations, and their functions are merely examples, which are not intended to limit the implementations of the invention described and/or required here.

As shown in FIG. 7, the device 700 includes a computing unit 701, configured to execute various appropriate actions and processes according to a computer program stored in a read-only memory (ROM) 702 or a computer program loaded from a storage unit 708 to a random access memory (RAM) 703. In the RAM 703, various programs and data required for the device 700 may be stored. The computing unit 701, the ROM 702 and the RAM 703 may be connected with each other by a bus 704. An input/output (I/O) interface 705 is also connected to the bus 704.

A plurality of components in the device 700 are connected to the I/O interface 705, which include: an input unit 706, for example, a keyboard, a mouse; an output unit 707, for example, various types of displays, speakers; the storage unit 708, for example, a magnetic disk, an optical disk; and a communication unit 709, for example, a network card, a modem, a wireless transceiver. The communication unit 709 allows the device 700 to exchange information/data through a computer network such as Internet and/or various types of telecommunication networks with other devices.

The computing unit 701 may be various types of general and/or dedicated processing components with processing and computing abilities. Some examples of the computing unit 701 include but not limited to a central processing unit (CPU), a graphics processing unit (GPU), various dedicated AI computing chips, various computing units run on which a machine learning model algorithm, a digital signal processor (DSP), and any appropriate processor, controller, microcontroller, etc. The computing unit 701 executes various methods and processes as described above, for example, a method for adaptive code processing based on artificial intelligence. For example, in some embodiments, the method for adaptive code processing based on artificial intelligence may be further implemented as a computer software program, which is tangibly contained in a machine readable medium, such as the storage unit 708. In some embodiments, a part or all of the computer program may be loaded and/or installed on the device 700 via the ROM 702 and/or the communication unit 709. When the computer program is loaded on the RAM 703 and executed by the computing unit 701, one or more steps in the method for adaptive code processing based on artificial intelligence may be performed as described above. Optionally, in other embodiments, the computing unit 701 may be configured to perform the method for code processing in other appropriate ways (for example, by virtue of a firmware).

Various implementations of the systems and techniques described above may be implemented by a digital electronic circuit system, an integrated circuit system, field programmable gate arrays (FPGAs), application specific integrated circuits (ASICs), application specific standard products (ASSPs), system on chip (SOCs), load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided for the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or a server.

In the context of the invention, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the above. More specific examples of machine-readable storage media include electrical connections based on one or more wires, portable computer disks, hard disks, RAMs, ROMs, electrically programmable read-only-memory (EPROM), fiber optics, compact disc read-only memories (CD-ROM), optical storage devices, magnetic storage devices, or any suitable combination of the above.

In order to provide interaction with a user, the systems and techniques described herein may be implemented on a computer having a display device (e.g., a cathode ray tube (CRT) or a liquid crystal display (LCD) monitor) for displaying information to the user; and a keyboard and pointing device (such as a mouse or trackball) through which the user can provide input to the computer. Other kinds of devices may also be used to provide interaction with the user. For example, feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for esxample, a user computer with a graphical user interface or a web browser, through which the user can interact with the implementation of systems and technologies described herein), or any combination includes such background components, intermediate computing components, or front-end components. The components of the system may be interconnected by any form or medium of digital data communication (e.g., a communication network). Examples of communication networks include: a local area network (LAN), a wide area network (WAN), the Internet, and the block-chain network.

The computer system may include a client and a server. The client and server are generally remote from each other and interacting through a communication network. A client-server relationship is generated by computer programs running on the respective computers and having the client-server relationship with each other. The server may be a cloud server, also called a cloud computing server or cloud host, which is a host product in cloud computing service systems. The cloud server solves defects of high management difficulty and weak business extensibility existing in traditional physical hosts and virtual private server services (VPSs). The server may also be a server in a distributed system, or a server integrated with a block-chain.

It should be understood that the various forms of processes shown above can be used to reorder, add or delete steps. For example, the steps described in embodiments of the invention may be performed in parallel, sequentially, or in a different order, as long as a desired result of the technical solution disclosed in the invention is achieved, which is not limited in the invention.

Additionally, the terms "first" and "second" are used for descriptive purposes only and are not to be construed as indicating or implying relative importance or implicitly specifying a quantity of technical features indicated. Thus, a feature defined with the terms "first", "second" may expressly or impliedly include at least one such feature. In the description of the invention, "a plurality of" means at least two, such as two, three, etc., unless otherwise expressly and specifically limited. In the description of the invention, the words "if" and "in a case" may be construed as "at ......" or "when ......" or "in response to a determination" or "in the.... circumstances".

The above specific embodiments do not constitute a limitation on the protection scope of the invention. Those skilled in the art should understand that various modifications, combinations, sub-combinations and substitutions can be made according to design requirements and other factors.

**Claims**

1. A method for adaptive code processing based on artificial intelligence, comprising:

   obtaining (101, 201, 301) a candidate code set, wherein the candidate code set comprises a plurality of candidate codes, first description information corresponding to each candidate code, and second description information corresponding to each code slice in the candidate codes;
   determining (102, 302) a similarity between every two candidate codes in the candidate code set based on a plurality pieces of first description information and a plurality pieces of second description information;
   obtaining (103, 205) a new candidate code set by performing crossover and mutation on two candidate codes with a similarity less than a first threshold; and
   returning (104, 206, 307) to the step of determining the similarity based on the new candidate code set until a target code set meeting a requirement is obtained.

2. The method according to claim 1, wherein determining (102, 302) the similarity between every two candidate codes in the candidate code set based on the plurality pieces of first description information and the plurality pieces of second description information comprises:

   determining (202), based on every two pieces of first description information, a global similarity between corresponding two candidate codes;
   determining (203), based on second description information corresponding to each code slice in every two candidate codes, a local similarity between every two candidate codes; and
   obtaining (204) the similarity between every two candidate codes by fusing the global similarity and the local similarity.

3. The method according to claim 1 or 2, further comprising:
   in a case that a similarity between any two candidate codes is greater than or equal to the first threshold and a local similarity between partial code slices in the any two candidate codes is less than a second threshold, obtaining a new candidate code by performing the crossover and mutation on the partial code slices in the any two candidate codes.

4. The method according to one of claims 1 to 3, wherein obtaining (101, 201, 301) the candidate code set comprises at least one of:

   determining a code generated during an evolution process of a received code to be processed as a candidate code; or
   obtaining a candidate code associated with a received code processing instruction from a reference code library.

5. The method according to claim 4, wherein obtaining (103, 205) the new candidate code set by performing the crossover and mutation on two candidate codes with the similarity less than the first threshold comprises:

   obtaining (303) a new candidate code by performing the crossover and mutation on two candidate codes with the similarity less than the first threshold;
   determining (304) an update strategy for the candidate code set based on a type of the code processing instruction and/or a first parameter in the code processing instruction, wherein the update strategy indicates a proportion of parent codes comprised in the new candidate code set, a quantity of parent codes comprised in the new candidate code set, and/or a filtering condition for parent codes;
   obtaining (305) a target parent code from the candidate code set based on the update strategy; and
   determining (306) the new candidate code and the target parent code as the new candidate code set.

6. The method according to one of claims 1 to 5, further comprising:

   in a case that an evaluation service in a system is in a selected state, or in a case that a received code processing instruction indicates invoking an evaluation service, obtaining an evaluation result output by the evaluation service by invoking the evaluation service based on the new candidate code set, wherein the evaluation result comprises an evaluation value of a candidate code and/or a code slice to be updated in the candidate code; and updating the new candidate code set based on the evaluation result.

7. The method according to claim 6, wherein updating the new candidate code set based on the evaluation result comprises at least one of:

deleting a candidate code with an evaluation value less than an evaluation threshold in the new candidate code set; or
obtaining a new candidate code by updating the code slice to be updated in the candidate code.

8. The method according to claim 7, wherein obtaining the new candidate code by updating the code slice to be updated in the candidate code comprises:

determining a similarity between second description information of the code slice to be updated and third description information of each code slice in a gene pool;
obtaining, based on the similarity, a target code slice or a target parent code comprising the target code slice from the gene pool; and
obtaining the new candidate code by updating the code slice to be updated by using the target code slice or the target parent code.

9. The method according to claim 8, wherein obtaining, based on the similarity, the target code slice or the target parent code comprising the target code slice from the gene pool comprises:
in a case that a control signal is received, obtaining, based on the control signal and the similarity, the target code slice or the target parent code comprising the target code slice from the gene pool, wherein the control signal indicates a retrieval logic and/or a quantity of retrieval results.

10. The method according to claim 8 or 9, further comprising at least one of:

determining, based on first description information and/or second description information associated with a candidate code with an evaluation value greater than the evaluation threshold, an index corresponding to the candidate code; or
associatively storing the candidate code and the index in the gene pool.

11. An apparatus (50) for adaptive code processing based on artificial intelligence, comprising:

a first obtaining module (501), configured to obtain a candidate code set, wherein the candidate code set comprises a plurality of candidate codes, first description information corresponding to each candidate code, and second description information corresponding to each code slice in the candidate codes;
a first determining module (502), configured to determine a similarity between every two candidate codes in the candidate code set based on a plurality pieces of first description information and a plurality pieces of second description information;
a first processing module (503), configured to obtain a new candidate code set by performing crossover and mutation on two candidate codes with a similarity less than a first threshold; and
a second processing module (504), configured to return to the step of determining the similarity based on the new candidate code set until a target code set meeting a requirement is obtained.

12. An intelligent agent (60), comprising:

an input module (601), configured to receive a code to be processed and/or a code processing instruction;
a processing module (602), configured to, based on the code to be processed and/or the code processing instruction, obtain a target code set by calling a large model to execute the method according to any one of claims 1 to 10; and
an output module (603), configured to output the target code set.

13. A non-transitory computer readable storage medium, storing computer instructions, wherein the computer instructions are caused to enable a computer to perform the method according to any one of claims 1 to 10.

**14.** A computer program product, comprising a computer program which when executed by a processor to perform the method according to any one of claims 1 to 10.

obtaining a candidate code set — 101

determining a similarity between every two candidate codes in the candidate code set based on a plurality pieces of first description information and a plurality pieces of second description information — 102

obtaining a new candidate code set by performing crossover and mutation on two candidate codes with a similarity lower than a first threshold — 103

returning to the step of determining the similarity based on the new candidate code set until a target code set meeting a requirement is obtained — 104

FIG. 1

obtaining a candidate code set — 201

determining, based on every two pieces of first description information, a global similarity between corresponding two candidate codes — 202

determining, based on second description information corresponding to each code slice in every two candidate codes, a local similarity between every two candidate codes — 203

determining, based on second description information corresponding to each code slice in every two candidate codes, a local similarity between every two candidate codes — 204

obtaining a new candidate code set by performing crossover and mutation on two candidate codes with a similarity lower than a first threshold — 205

returning to the step of determining the similarity based on the new candidate code set until a target code set meeting a requirement is obtained — 206

FIG. 2

obtaining a candidate code set — 301

determining a similarity between every two candidate codes in the candidate code set based on a plurality pieces of first description information and a plurality pieces of second description information — 302

obtaining a new candidate code by performing the crossover and mutation on two candidate codes with the similarity less than the first threshold — 303

determining an update strategy for the candidate code set based on a type of the code processing instruction and/or a first parameter in the code processing instruction — 304

obtaining a target parent code from the candidate code set based on the update strategy — 305

determining the new candidate code and the target parent code as the new candidate code set — 306

returning to the step of determining the similarity based on the new candidate code set until a target code set meeting a requirement is obtained — 307

FIG. 3

in a case that an evaluation service in a system is in a selected state, or in a case that a received code processing instruction indicates invoking an evaluation service, obtaining an evaluation result output by the evaluation service by invoking the evaluation service based on the new candidate code set $\sim$ 401

↓

updating the new candidate code set based on the evaluation result $\sim$ 402

FIG. 4

apparatus 50 for adaptive code processing based on artificial intelligence

first obtaining module 501

first determining module 502

first processing module 503

second processing module 504

FIG. 5

intelligent agent 60

input module 601

processing module 602

output module 603

FIG. 6

700

701
computing
unit

702
ROM

703
RAM

704

705
I/O interface

706
input unit

707
output unit

708
storage
unit

709
communication
unit

FIG. 7